Europäisches Patentamt

European Patent Office

Office européen des brevets

(19)

(11) Veröffentlichungsnummer: **0 289 901 B1**

# (12) EUROPÄISCHE PATENTSCHRIFT

(45) Veröffentlichungstag der Patentschrift: **16.09.92**

(51) Int. Cl.⁵: **C09K 3/10**

(21) Anmeldenummer: **88106594.0**

(22) Anmeldetag: **25.04.88**

(54) **"Diurethane als stabilisierende Zusätze in Dichtungsmassen".**

(30) Priorität: **04.05.87 DE 3714768**

(43) Veröffentlichungstag der Anmeldung:
**09.11.88 Patentblatt 88/45**

(45) Bekanntmachung des Hinweises auf die
Patenterteilung:
**16.09.92 Patentblatt 92/38**

(84) Benannte Vertragsstaaten:
**AT BE CH DE ES FR GB IT LI NL SE**

(56) Entgegenhaltungen:
**EP-A- 0 189 484**

(73) Patentinhaber: **Henkel Kommanditgesellschaft
auf Aktien
Postfach 1100 Henkelstrasse 67
W-4000 Düsseldorf-Holthausen(DE)**

(72) Erfinder: **Emmerling, Winfried Dr.
Lärchenweg 6
W-4006 Erkrath 2(DE)**
Erfinder: **Podola, Tore
Deusserstrasse 31
W-4019 Monheim(DE)**
Erfinder: **Wichelhaus, Jürgen, Dr.
Egenstrasse 60
W-5600 Wuppertal(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft die Verwendung bestimmter Diurethane als stabilisierende Zusätze in Dichtungsmassen, welche entweder auf Isocyanatendgruppen enthaltenden Prepolymeren beruhen, und/oder auf sogenannten Plastisolen, welche quallbares Polyvinylchlorid oder quallbare Copolymere aus Vinylchlorid mit Monomeren aus der von Vinylacetat, Vinylpropionat, Acrylsäure, Alkylester und Methacrylsäurealkylester gebildeten Gruppe in Pulverform zusammen mit Weichmachern für diese Polymere darstellen.

Dichtungsmassen werden in erheblichem Umfang in der Technik bei der Konstruktion der verschiedenartigsten Objekte verwendet. Ein Prinzip der Aushärtung beruht auf der Feuchtigkeitshärtung, wobei Isocyanatgruppen als reaktive Endgruppen von Prepolymeren eine Vernetzungsreaktion eingehen. Weiterhin ist es auch bekannt, Plastisole für ähnliche Zwecke einzusetzen, wobei in diesem Fall die Überführung in einen festen bzw. verfestigten Zustand über eine thermische Reaktion erfolgt. Allerdings kann auch eine Vergelung und endliche Aushärtung derartiger Systeme bei Raumtemperatur oder leicht erhöhter Temperatur über längere Zeiträume von sich aus erfolgen.

Ein Nachteil dieser feuchtigkeitshärtenden System ist darin zu sehen, daß sie häufig auch bei weitgehendem Ausschluß von Luft bzw. Feuchtigkeit nicht hinreichend stabil sind, sondern ihre Viskosität nach einigen Monaten soweit durch Vernetzungsreaktion angestiegen ist, daß eine Verarbeitung in den üblichen Werkzeugen nicht mehr möglich ist..

Hochwertige Polyurethansysteme, wie sie als Dichtungsmassen für die Bau- und Automobilindustrie und für den Schiffsbau verwendet werden, enthalten häufig quellbares PVC-Pulver als thioxotropen Füllstoff. Dieser Füllstoff weist gegenüber anderen bekannten Füllstoffen wie Kreide, Kieselsäure und Ruß einen äußerst geringen Wassergehalt auf, der die Lagerbeständigkeit der Isocyanatgruppen enthaltenden Massen nicht beeinträchtigt. Außerdem verleiht er der fertigen Masse hervorragende rheologische Eigenschaften. Als Quellmittel und Weichmacher für das PVC werden in erster Linie Alkylbenzolsulfonsäureester oder Phthalsäureester, z.B. Dioctylphthalat eingesetzt. Die erwähnten Isocyanatsysteme weisen allerdings den Nachteil auf, daß die Kombination von angequollenem PVC und Weichmacher in der Masse, insbesondere bei höheren Lagertemperaturen, zum Weiterquellen neigt. Dadurch erfolgt ein starker Anstieg der Viskosität, der zu einer erheblichen Beeinträchtigung der Verarbeitungsmöglichkeit führt.

Beim Versuch, das Nachquellen mit üblichen Stabilisierungszusätzen, wie z.B. Polyisobutylen, zu verhindern, wurde festgestellt, daß wegen Unverträglichkeit dieser unpolaren Verbindungen mit den Isocyanatprepolymeren Auswanderungserscheinungen dieser Substanzen bei den ausgehärteten Massen das Erscheinungsbild ungünstig veränderten.

Ein weiterer Nachteil dieser Polyurethansysteme ist, daß wegen der Viskosität der eingesetzten Prepolymeren nur ein relativ enger, vorzugsweise niedermolekularer Bereich, verwendbar ist, da höherviskose Prepolymere nicht mit dem üblicherweise eingesetzten Weichmacher verdünnt werden können. Ein höherer Weichmacheranteil würde nämlich das Quellverhalten des PVC ungünstig verändern. Gerade aber hochviskose Prepolymere zeigen nach der Aushärtung die erwünschten, besonders guten mechanischen Eigenschaften. Es besteht daher ein Bedürfnis, die aufgezeigten Probleme zu lösen.

Aufgabe der vorliegenden Erfindung war es daher, solche Stabilisierungsmittel für Isocyanatendgruppen enthaltende Prepolymere, welche in Fugendichtungsmassen eingesetzt werden, bereitzustellen, die einerseits die Vernetzungsreaktion der mit Isocyanatgruppen-terminierten Prepolymeren selbst verzögern bzw. verhindern und andererseits das Quellverhalten des PVC bzw. anderer, für den Zweck eingesetzter Mischpolymerisate des Vinylchlorids mit anderen Comonomeren nicht ungünstig beeinflussen sowie nach Möglichkeit sogar eine vorzeitige Quellung in den eingesetzten Lösungsmitteln erheblich verzögern.

Erfindungsgemäß können diese Probleme gelöst werden durch Verwendung eines oder verschiedener Diurethane der allgemeinen Formeln (I) oder (II)

$R^1$-NH-CO-O-$R^2$-O-CO-NH-$R^1$     (I)

$R^3$-O-CO-NH-$R^4$-NH-CO-OR$^3$     (II)

in denen $R^1$ Alkyl- oder Aralkylreste mit 3 bis 22 C-Atomen oder Phenylreste,
$R^2$ ein Rest eines difunktionellen Polypropylenglykols mit einem Zahlenmittel des Molekulargewichts von 1000 bis 4000,
$R^3$ Reste eines monofunktionellen Polypropylenglykol-monoalkylethers mit einem Zahlenmittel des Molekulargewichts von 500 bis 2000 und
$R^4$ eine Alkylengruppe mit 4 bis 36 C-Atomen, eine Diarylmethan- oder eine Toluylidengruppe bedeuten,
als stabilisierende Zusätze in Duchtungsmassen, welche auf Isocyanatendgruppen enthaltenden Prepolymeren aus di- und trifunktionellen Polyether- oder Polyester-Polyolen und/oder in Weichmacher quellbarem Polyvinylchlorid oder quellbaren Copolymeren des Vinylchlorids mit Monomeren aus der von Vinylacetat, Vinylpropionat, Acrylsäure-alkylestern und Methacrylsäure-alkylestern gebildeten Gruppe in Pulverform sowie Weichmachern für diese Polymeren basieren. Insbesondere die Verwendung eines oder verschiedener Diurethane gemäß Patentanspruch 1 in einer Menge von 50 bis 150 Gew.-%, bezogen auf die Isocyanatendgruppen aufweisenden Prepolymeren in der Dichtungsmasse, stellt eine bevorzugte Ausführung der Einfindung dar.

Die Erfindung betrifft also auch eine Dichtungsmasse, hergestellt unter Verwendung der vorstehend charakterisierten stabilisierenden Zusätze, enthaltend

a) 20 bis 50 Gewichtsteile des Isocyanatendgruppen enthaltenden Prepolymeren,
b) 20 bis Gewichtsteile quellbares PVC oder quellbares Copolymerisat des Vinylchlorids in Pulverform,
c) 20 bis 40 Gewichtsteile Alkylbenzolsulfonsäure-alkylester und/oder Phthalsäure-dialkylester sowie
d) 10 bis 50 Gew.-%, bezogen auf Isocyanatendgruppen aufweisendes Polyurethan-Prepolymeres, eines oder mehrerer der Diurethane gemäß den Formeln (I) und (II) des Anspruchs 1.

Die Erfindung ist insbesondere auf feuchtigkeitshärtende Dichtungsmassen mit einem Gehalt an Isocyanatendgruppen aufweisenden Prepolymeren der eingangs genannten Art gerichtet, die ein derartiges Verdünnungsmittel enthalten. Die Diurethanen wirken als zusätzlicher Weichmacher (Extender) für Polyurethan-Dichtungsmassen mit einem Gehalt an quellbarem PVC-Pulver als Thixotropiermittel.

Das erfindungsgemäß verwendete Diurethan ist gegenüber der PVC-Quellung inaktiv, setzt gegebenenfalls die Viskosität der verwendeten Prepolymere herab und ist gegenüber diesen optimal verträglich, d.h. es zeigt keine Auswanderungserscheinungen, und verbessert die Lagerstabilität der eingesetzten Prepolymeren.

Die in den feuchtigkeitshärtenden Dichtungsmassen der Erfindung einzusetzenden, Isocyanatendgruppen aufweisenden Prepolymere auf Basis von di- und trifunktionellen Polyetherpolyolen sind dem Fachmann auf dem Gebiet der Dichtungsmassen geläufig. Ausgangsmaterial für die Herstellung der Prepolymere sind in erster Linie Polyether, wie sie durch Addition von Alkylenoxiden wie insbesondere Ethylenoxid und/oder Propylenoxid an zweiwertige Alkohole wie Glykol (Ethylenglykol), Propylenglykol und Butandiol-1,4 erhalten werden können. Ferner ist es möglich, durch Ringöffnungspolymerisation von Tetrahydrofuran entsprechende 1,4-Ether des Butandiols herzustellen. Neben den Polyethern können in bekannter Weise zur Herstellung geeigneter, wenigstens zwei Hydroxylgruppen enthaltender Polyester die Veresterungsprodukte des Glykols, Diethylenglykols, Propylenglykols und 1,4-Butandiols mit Dicarbonsäuren wie Adipinsäure, Sebazinsäure, Terephthalsäure, Phthalsäure bzw. Anhydriden derselben und dergleichen verwendet werden. Auch derartige Polyester sind in der Technik allgemein üblich und bekannt als Ausgangsmaterialien für die Herstellung von Isocyanat-Prepolymeren. Die Molekülmassen der Ausgangsmaterialien betragen im Mittel 250 bis 10000, vorzugsweise 1000 bis 3000.

Die vorgenannten Ausgangsmaterialien werden dann mit geeigneten Diisocyanaten in einem solchen Molverhältnis von NCO-Gruppen zu Hydroxylgruppen umgesetzt, daß ein Überschuß von Isocyanat vorleigt. Hierfür geeignete Diisocyanate sind die isomeren Toluylendiisocyanate, insbesondere technische Gemische des 2,4- und 2,6-Isomeren, Diphenylmethan-diisocyanat, 1,6-Hexamethylen-diisocyanat, Naphthylen-diisocyanat, Xylylen-diisocyanat, Isophoron-diisocyanat, (2,4,4-Trimethyl-1,6-diisocyanato-hexan) und dimeres Toluylen-diisocyanat-2,4. Die so erhaltenen Prepolymere sollen eine Gehalt von etwa 1 bis 4 Gew.-% Isocyanatgruppen aufweisen.

Besonders bevorzugt ist die Verwendung eines Prepolymeren auf Basis von di- und trifunktionellen Polyetherpolyolen. Man kann in diesem Fall zwei Hydroxylgruppen enthaltende Polyether und/oder Polyester der obengenannten Art mit einer Molmasse zwischen 500 und 5000 mit einem Diisocyanat in Gegenwart einer mehr als bifunktionellen niedermolekularen Hydroxylverbindung soweit umsetzen, daß ein Isocyanatgehalt von etwa 1,5 bis 3,5 Gewichtsprozent resultiert. Dabei werden technisch besonders günstige ausgehärtete Massen mit guten elastischen Eigenschaften erhalten.

Die quellbaren Polymere und Copolymere des Vinylchlorids in Pulverform, die im Handel erhältlich sind, haben einen K-Wert zwischen etwa 45 und 80 und sind dem Fachmann ebenso bekannt wie die einzusetzenden Weichmacher. Hier handelt es sich in erster Linie um Alkylbenzolsulfonsäurealkylester und/oder um Phthalsäurealkylester. Aber auch aliphatische Dicarbonsäureester (Octyl- oder Isodecylester der Adipinsäure) oder sogenannte Polymerweichmacher (Polyester aus Adipin-, Sebazin-, Azelain und Phthalsäure mit Diolen wie Propan-, Butan- und Hexandiol bei einem Mol-Gewicht von 900 bis 5000) sowie Epoxidweichmacher (epoxidierte Fettsäurederivate) sind brauchbar bzw. können mitverwendet werden.

Als Füllstoffe können den Dichtungsmassen der Erfindung Alumosilikate, wie Ton und Feldspat, gemahlener Dolomit, Calciumcarbonat, Calciumsulfat, Calciumoxid, Zinkoxid und dergleichen zugesetzt werden. Als Pigmente eignen sich insbesondere Titandioxid, Eisenoxid, Ruß und Chrompigmente. Als Stabilisatoren können die üblichen verwendet werden, z.B. Benztriazole und sterisch gehinderte Phenole.

Die Eigenschaften der Dichtungsmassen der Erfindung lassen sich über den Anteil an Diurethan der allgemeinen Formeln (I) oder (II) steuern. Bei relativ hohen Anteilen wird die Viskosität günstig beeinflußt, d.h. die Viskosität steigt bei der Lagerung nicht so schnell an. Natürlich wird man auch bei hohen Anteilen von einer relativ geringen Viskosität ausgehen. Diese Wirkung auf die Stabilität ist besonders bei hohen Anteilen an Isocyanat-Prepolymeren von Bedeutung, insbesondere dann, wenn bereits verzweigte Isocyanatendgruppen aufweisende Prepolymere eingesetzt werden, die zu guten mechanischen Eigenschaften führen. Man kann somit lagerstabile Dichtungsmassen herstellen, die sonst unter praktikablen Bedingungen nicht erhalten werden können.

Beispiele

Herstellung der zu verwendenden Diurethane

A) In einem beheizbaren Rührreaktor wurden 450 Gewichtsteile Polyoxypropylenglykol 2025 (Zahlenmittel des Molekulargewichts 2000), 53,6 Gewichtsteile Phenylisocyanat und 0,05 Gewichtsteile Dibutylzinndilaurat bei 100°C unter $N_2$-Atmosphäre gerührt. Die Reaktion wurde durch Bestimmung des NCO-Gehaltes verfolgt. Wenn kein freies NCO mehr nachgewiesen wurde (nach ca. 6 Stunden), wurde die Reaktion abgebrochen. Viskosität des Endproduktes: 3000 mPa.s nach Brookfield bei 25°C.

B) Unter den Bedingungen nach A wurden 552 Gewichtsteile Polypropylenglykol-monobutylether (Zahlenmittel des Molekulargewichts 1000). 62,5 Gewichtsteile 4,4'-Diphenylmethandiisocyanat (MDI) und 0,06 Gewichtsteile Dibutylzinndilaurat umgesetzt.

Viskosität des Endproduktes: 4000 mPa.s nach Brookfield bei 25°C.

Beispiel 1 (feuchtigkeitshärtendes Polyurethanprepolymer)

In einem beheizbaren Reaktionsgefäß wurden unter Feuchtigkeitsausschluß 450 g Polypropylglykol (Zahlenmittel des Molekulargewichts 2000), 450 g Ethylenoxid-Propylenoxid-Ethylenoxid-Blockcopolymer (Zahlenmittel des Molekulargewichts 2000 mit 10 Gew.-% Ethylenoxid), 4,5 g Trimethylopropan und 181,2 g 4,4'-Diphenylmethan-diisocyanat bei 70 bis 80°C solange zur Reaktion gebracht, bis der NCO-Gehalt auf 1,7 % abgesunken war.

Das erhaltene Reaktionsprodukt wurde mit 325 g des Diurethans nach A vermischt und unter Feuchtigkeitsausschluß gelagert. Unmittelbar nach der Herstellung hatte des Gemisch eine Viskosität von 60 Pa.s bei 25°C nach Brookfield. Die Viskosität steig im Verlauf einer Woche auf 75 Pa.s an und erreichte nach 4 Wochen eine Viskosität von 85 Pa.s.

Wurde dem Isocyanat-terminierten Prepolymeren kein Diurethan zugesetzt, so lag die Viskosität des Isocyanat-terminierten Prepolymeren unmittelbar nach der Herstellung bei 100 Pa.s bei 25°C und war nach einer Woche auf 160 Pa.s und nach 4 Wochen auf 330 Pa.s angestiegen.

Beispiel 2 (feuchtigkeitshärtende Polyurethanprepolymermasse mit Gehalt an PVC)

In einem beheizbaren Mischgefäß, das mit einem kräftigen Rührer versehen war, wurde unter Stickstofatmosphäre bei 50°C eine Mischung hergestellt aus 200 Gew.-Teilen eines feinpulverigen PVC-Emulsionshomopolymerisats (K-Wert 73), 275 g des Alkyl-($C_{16-18}$)-sulfonsäureesters von Kresol, 45 g Titandioxid und 60 g Xylol. Nachdem das Gemisch etwa 1 Stunde bei 50°C gerührt worden war, wurden 360 g eines Gemischs aus Isocyanat-terminiertem Prepolymeren (Beispiel 1) und 325 g Diurethan nach B zugegeben.

Das fertife Produkt hatte nach der Herstellung eine Extrusionsrate von 205 g/min, nach 1 Woche von 182 g/min sowie nach 4 Wochen von 120 g/min, (DIN 52 456).

Beispiel 3 (Einfluß von Diurethan auf PVC-Plastisol)

In einem Planetendissolver wurden 120 g des quellbaren PVC-Pulvers, 123,7 g eines $C_{15}$-Alkylsulfonsäureesters, 30 g Xylol und 13,8 g des Diurethans aus Beispiel A 1 Stunde derart dispergiert, daß die Innentemperatur 50°C nicht übersteigt. Die zähviskose Masse wurden bei Umgebungstemperatur gelagert. Durch Messung der Viskosität wurde beobachtet, ob die Masse lagerstabil ist, wobei bei 25°C folgende Viskositäten (Pa.s) gemessen wurden:

| 1 Tag | 1 Monat | 2 Monate | 4 Monate |
|-------|---------|----------|----------|
| 3400  | 3600    | 4000     | 4160     |

Ein Nachquellen des PVC-Plastisols war auch nach 4 Monaten nicht zu beobachten.

Vergleichsversuch (PVC-Quellung ohne Diurethanzusatz)

Unter den Bedingungen des Beispiels 1 wurden 120 g des quellbaren PVC-Pulvers, 137,5 g des $C_{15}$-Alkylsulfonsäureesters und 30 g Xylol dispergiert, d.h. der im Beispiel 1 verwendete Polyurethanextender wurde durch das gleiche Volumen des benutzten PVC-Weichmachers ersetzt. Die Masse wurde einen Tag bei Umgebungstemperatur durch Nachquellen des PVC-Plastisols fest.

**Patentansprüche**

1. Verwendung eines oder verschiedener Diurethane der allgemeinen Formeln (I) oder (II)

   $R^1$-NH-CO-O-$R^2$-O-CO-NH-$R^1$   (I)
   $R^3$-O-CO-NH-$R^4$-NH-CO-O$R^3$   (II)

   in denen $R^1$ Alkyl- oder Aralkylreste mit 3 bis 22 C-Atomen oder Phenylreste,
   $R^2$ ein Rest eines difunktionellen Polypropylenglykols mit einem Zahlenmittel des Molekulargewichts von 1000 bis 4000,
   $R^3$ Reste eines monofunktionellen Polypropylenglykol-monoalkylethers mit einem Zahlenmittel des Molekulargewichts von 500 bis 2000 und
   $R^4$ eine Alkylengruppe mit 4 bis 36 C-Atomen, eine Diaryl-methan- oder eine Toluylidengruppe bedeuten,
   als stabilisierende Zusätze in Dichtungsmassen, welche auf Isocyanatendgruppen enthaltenden Prepolymeren aus di- und trifunktionellen Polyether- oder Polyester-Polyolen und/oder in Weichmacher quellbarem Polyvinylchlorid oder quellbaren Copolymeren des Vinylchlorids mit Monomeren aus der von Vinylacetat, Vinylpropionat, Acrylsäure-alkylestern und Methacrylsäure-alkylestern gebildeten Gruppe in Pulverform sowie Weichmachern für diese Polymeren basieren.

2. Verwendung eines oder verschiedener Diurethane gemäß Patentanspruch 1 in einer Menge von 50 bis 150 Gew.-%, bezogen auf die Isocyanatendgruppen aufweisenden Prepolymeren in Dichtungsmasse.

3. Dichtungsmasse, hergestellt unter Verwendung der stabilisierenden Zusätze nach Ansprüchen 1 und 2, enthaltend
   a) 20 bis 50 Gewichtsteile des Isocyanatendgruppen enthaltenden Prepolymeren,
   b) 20 bis 40 Gewichtsteile quellbares PVC oder quellbares Copolymerisat des Vinylchlorids in Pulverform,
   c) 20 bis 40 Gewichtsteile Alkylbenzolsulfonsäure-alkyl-ester und/oder Phthalsäure-dialkylester sowie
   d) 10 bis 50 Gew.-%, bezogen auf Isocyanatendgruppen aufweisendes Polyurethan-Propolymeres, eines oder mehrerer der Diurethane gemäß den Formeln (I) und (II) des Anspruchs 1.

**Claims**

1. The use of one or more diurethanes corresponding to general formula (I) or (II) below

   $R^1$-NH-CO-O-$R^2$-O-CO-NH-$R^1$   (I)
   $R^3$-O-CO-NH-$R^4$-NH-CO-O$R^3$   (II)

   in which $R^1$ is a $C_{3-22}$ alkyl or aralkyl radical or a phenyl radical,
   $R^2$ is the residue of a difunctional polypropylene glycol having a number average molecular weight of from 1,000 to 4,000,
   $R^3$ is the residue of a monofunctional polypropylene glycol monoalkyl ether having a number average molecular weight of from 500 to 2,000 and

$R^4$ is a $C_{4-36}$ alkylene group, a diaryl methane group or a tolylidene group,

as stabilizing additives in sealing compounds based on isocyanate-terminated prepolymers of difunctional and trifunctional polyether or polyester polyols and/or polyvinyl chloride swellable in plasticizers or correspondingly swellable copolymers of vinyl chloride with monomers from the group comprising vinyl acetate, vinyl propionate, alkyl acrylates and alkyl methacrylates in powder form and also plasticizers for these polymers.

2. The use of one or more diurethanes as claimed in claim 1 in a quantity of from 50 to 150% by weight, based on the isocyanate-terminated prepolymers in the sealing compound.

3. A sealing compound prepared using the stabilizing additives claimed in claims 1 and 2, containing
   a) 20 to 50 parts by weight of the isocyanate-terminated prepolymer,
   b) 20 to 40 parts by weight of swellable PVC or a swellable copolymer of vinyl chloride in powder form,
   c) 20 to 40 parts by weight alkylbenzenesulfonic acid alkyl ester and/or phthalic acid dialkyl ester and
   d) 10 to 50% by weight, based on the isocyanate-terminated polyurethane prepolymer, of one or more of the diurethanes corresponding to formulae (I) and (II) in claim 1.

## Revendications

1. Utilisation d'un ou plusieurs diuréthanes selon les formules générales (I) ou (II)

   $R^1$-NH-CO-O-$R^2$-O-CO-NH-$R^1$     (I)
   $R^3$-O-CO-NH-$R^4$-NH-CO-OR$^3$     (II)

   dans lesquelles
   $R^1$     représente des radicaux alkyle ou aralkyle avec de 3 à 22 atomes de carbone ou des radicaux phényle,
   $R^2$     représente un radical d'un polypropylèneglycol difonctionnel avec une valeur moyenne du poids moléculaire comprise entre 1000 et 4000,
   $R^3$     représente des radicaux d'un éther monoalkylique du polypropylèneglycol monofonctionnel avec une valeur moyenne du poids moléculaire comprise entre 500 et 2000, et
   $R^4$     représente un groupe alkylène avec de 4 à 36 atomes de carbone, un groupe diarylméthane ou un groupe toluylidène,
   comme additifs de stabilisation dans les masses d'étanchéité à base de prépolymères contenant des groupes terminaux d'isocyanates provenant des polyols di- ou trifonctionnels des polyéthers ou des polyesters et/ou à base de chlorure de polyvinyle pouvant gonfler dans un plastifiant ou de copolymères pouvant gonfler du chlorure de polyvinyle avec des monomères choisis dans le groupe formé de l'acétate de vinyle, du propionate de vinyle, des esters alkyliques de l'acide acrylique et des esters alkyliques de l'acide méthacrylique sous forme de poudre, ainsi qu'à base de plastifiants pour ces polymères.

2. Utilisation d'un ou de plusieurs diuréthanes selon la revendication 1, en quantité de 50 à 150% en poids rapportée aux prépolymères présentant des groupes terminaux isocyanate dans la masse d'étanchéité.

3. Masse d'étanchéité préparée en utilisant des additifs de stabilisation selon les revendications 1 et 2, et contenant :
   a) de 20 à 50 parties en poids de prépolymères contenant des groupes terminaux isocyanates,
   b) de 20 à 40 parties en poids de PVC pouvant gonfler ou de copolymères pouvant gonfler du chlorure de vinyle sous forme de poudre,
   c) 20 à 40 parties en poids d'ester alkylique d'un acide alkylbenzènesulfonique et/ou d'ester dialkylique de l'acide phtalique, ainsi que
   d) 10 à 50 parties en poids rapportées aux prépolymères de polyuréthanes présentant des groupes terminaux isocyanate d'un ou plusieurs des diuréthanes selon les formules (I) et (II) de la revendication 1.